# EUROPEAN PATENT APPLICATION

(11) **EP 0 647 501 A1**
(43) Date of publication of application: **12.04.1995**
(21) Application number: 94306400.6
(22) Date of filing: 31.08.1994
(51) Int. Cl.: B23P 19/04, B25B 27/00

(54) **Strip fitting apparatus and methods**

(30) Priority: 06.10.1993 GB 9320567
(71) Applicant: DRAFTEX INDUSTRIES LIMITED, Edinburgh EH3 6YY, Scotland (GB)
(72) Inventor: Brodowsky, Thomas, D-47915 Toenisvorst (DE)
(74) Representative: Foster, David Martyn

(57) **Abstract**

A tool for fitting a flange finisher (5) or door seal onto a flange (6) comprises a frame (20) having a top plate (22) carrying a support (50) contacting the outside of the base of the flange finisher (5). A depending leg (24) supports a reciprocating pneumatic motor (34) carrying an impact member (44) which is reciprocatable into and out of contact with the side wall (5B) of the flange finisher. A depending leg (26) carries a reaction member (32) in contact with the other side wall (5A). The flange finisher is initially fitted over the flange (6) with its side walls (5A,5B) splayed apart. When the motor (34) is energised, the impact member (44) applies repeated impacts to the flange finisher (5) so that its side walls (5A,5B) are pressed into gripping contact with the flange (6).

## Description

The invention relates to a tool for fitting a channel-shaped strip into embracing grip on a mount, comprising a support, reciprocatable means reciprocatably mounted with respect to the support and motor means connected to the reciprocatable means and mounted on the support and energisable to reciprocate the reciprocatable means with successive forward and retraction strokes whereby each forward stroke applies an impact force to the strip to force it on to the mount as the tool is moved along the strip.

An example of such a known tool is shown in EP-A-0 451 023. In this known tool, the reciprocatable means comprises a grooved head which engages the outside of the base of the channel of the strip and applies hammer blows to the base to force the strip onto the mount. The invention aims to provide a tool which improves the grip of the strip on the mount.

In accordance with the invention, therefore, the known tool is characterised in that at least one of the side walls of the strip is initially splayed outwardly and in that the support includes mounting means for mounting the reciprocatable means adjacent the outside of a first one of the side walls of the strip whereby each forward stroke of the reciprocatable means applies the said impact force to the outside of the first side wall whereby to move the side walls of the strip relatively towards each other and into firm embracing contact with the mount.

Tools embodying the invention for fitting flange finishers and door seals to motor vehicle bodies, and methods according to the invention for fitting flange finishers and door seals to such bodies, will now be described, by way of example only, with reference to the accompanying diagrammatic drawings in which:
Figure 1 is an end view of a flange finisher fitted onto a flange around a door opening;
Figure 2 corresponds to Figure 1 but shows a door seal instead of merely a flange finisher;
Figure 3 shows the flange finisher of Figure 1 in an initial configuration before it is fitted onto the flange;
Figure 4 shows the flange finisher of Figure 3 being offered up to the flange;
Figure 5 shows the door seal of Figure 2 in an initial configuration being offered up to the flange;
Figure 6 is a side view of one of the tools showing it mounted in an initial position over a flange finisher on a door flange;
Figure 7 corresponds to Figure 6 but shows the tool in operation;
Figure 8 is a perspective view of the tool of Figures 6 and 7;
Figure 9 corresponds to Figure 6 and shows a modified form of the tool;
Figures 10 and 11 are diagrammatic drawings showing the flange finisher and part of the tool for explaining a feature of the tool's operation;
Figure 12 is a diagrammatic perspective view of a modified form of the tool for attachment to a robot-controlled arm; and
Figure 13 diagrammatically shows a modification to the tool of Figure 12.

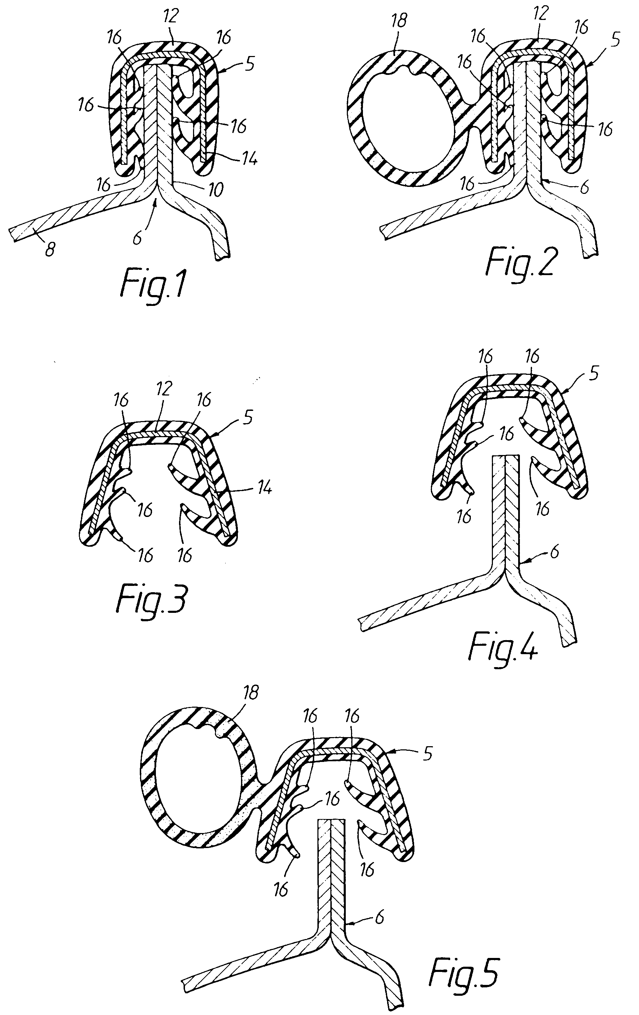

Figure 1 illustrates a flange finisher 5 fitted to a flange 6 which runs around the frame of a door such as in a motor vehicle body. The flange 6 is formed where inner and outer body panels 8 and 10 come together at the door opening and are welded to each other. The flange lies generally in the plane of the door opening.

The flange finisher 5 is generally channel-shaped in cross-section and is made of (for example) extruded plastics or rubber material 12 and has an embedded resilient core or carrier 14. The carrier 14 may be of any suitable construction. For example, it may be in the form of an unapertured metal channel. Instead, the channel can be apertured. For example, the carrier can be in the form of U-shaped elements arranged side-by-side to define the channel and connected together by short integral connecting links or perhaps entirely unconnected to each other. Instead, the carrier can be made of looped wire. Other forms of carrier are possible, however.

The carrier 14 is preferably incorporated into the extruded material 12 using a cross-head extruder process.

As shown, the extruded material 12 is formed with integral inwardly extending flexible lips 16. There may be more or fewer of these lips than shown in the Figures, and there can be different numbers of lips on each side of the channel and they can have different sizes or shapes. The lips provide frictional grip between the flange finisher and the faces of the flange 6 and help to secure the flange finisher firmly on the flange. The material of the lips can be made of softer consistency than the remainder of the extruded material 12 so as to improve this frictional grip.

In use, the flange finisher 5 trims the flange and protects it. In addition, it protects occupants of the vehicle from the flange.

The flange finisher 5 may carry a soft tubular sealing section 18 running along one of its side walls as shown in Figure 2 so that the combination provides a door seal. The sealing section 18 is advantageously made of soft rubber material such as of sponge or foamed consistency. It may be separately produced and adhesively secured to the side of the flange finisher 5 or may be extruded integrally with the material 12. The closing door of the opening closes onto and partially compresses the sealing section 18 which thus provides a draught and weather-proof seal extending around the periphery of the opening. The flange finisher itself also provides draught and weather proof sealing in that the lips 16 help to prevent draughts or moisture from entering the interior of the vehicle by travelling inside the flange finisher and around the flange.

The tubular sealing section 18 may be of any suitable configuration to suit the particular applications. When the opening to be sealed is a luggage compartment opening, for example, the tubular sealing section may be mounted to run along the outside of the (inverted) base of the flange finisher.

Clearly, it is of major importance that the flange finisher 5 securely grips the flange 6 so that it will be retained in position on the flange throughout its life and will not inadvertently become pulled off - which would not only cause an unsightly appearance but which would reduce draught and weather proof sealing. However, it is also important that the flange finisher can be easily fitted onto the flange during assembly of the vehicle. If the flange finisher or door seal is fitted onto the flange when in the configuration shown in Figures 1 or 2, a significant amount of effort will be required and this effort in itself may damage the flange finisher or door seal. In addition, the flange thickness may not be constant throughout the entire periphery of the door opening. For example, at certain points the flange may be made up of more or less than the two body panels 8 and 10 shown in Figures 1 and 2. Where the flange is of extra thickness, even greater effort will be required to fit the flange finisher.

It has therefore been previously proposed that flange finishers should be supplied in the configuration shown in Figure 3 - that is, with the side walls of the channel initially splayed apart. This enables the flange finisher to be loosely fitted over the flange 6 without any significant effort (see Figure 4). Thereafter, the splayed-apart seals are pressed towards each other to bring them into the configuration shown in Figure 1.

This method can equally be applied to the door seal of Figure 2 of course, and Figure 5 corresponds to Figure 4 but shows the door seal of Figure 2 with its side walls initially splayed apart before being pressed towards each other into contact with the flange.

The tools and methods now to be described in more detail are for use with flange finishers having the initial configuration shown in Figure 4, and door seals having the initial configuration shown in Figure 5, and for pressing the splayed-apart side walls towards each other so as to secure the flange finisher or door seal firmly into position on the flange (as shown in Figures 1 and 2).

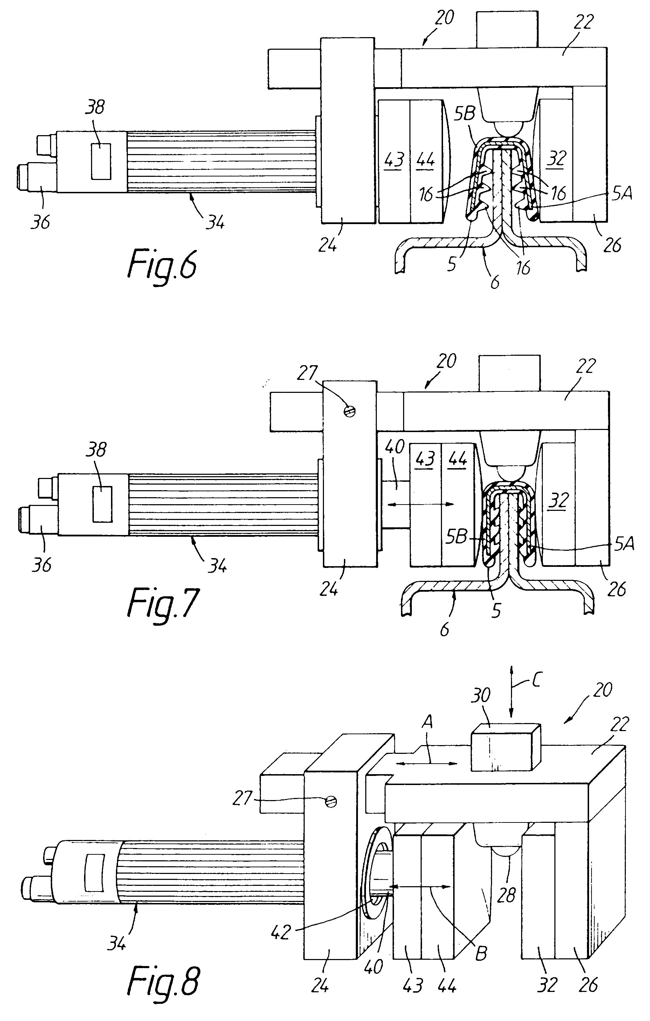

One form of the tool is illustrated in Figures 6,7 and 8.

The tool comprises a frame 20 of rigid construction. The frame comprises a top member 22 which has two depending legs, that is, a motor support 24 and a back plate 26. As shown in Figure 8, the top member 22 is slidable, in the direction of the arrows A, with respect to the motor support 24. The top member is configured with a reduced-section portion 26 which slides within a matchingly shaped aperture in the motor support 24. A locking screw 27 extends through the wall of the support member 24 which defines the aperture and can be tightened manually to lock the top member 22 in a desired position with respect to the support member 24.

The back plate 26 is rigidly attached to the top member 22.

The top member 22 supports a rotatable ball 28 mounted within a ball support 30.

The back plate 26 supports a reaction plate 32.

A reciprocating motor 34 is mounted on the support 24. The motor 34 may be of any suitable form. For example, it may be electromagnetic or pneumatic. Preferably, it is pneumatic and is supplied with compressed air by means of a connector 36. It can be switched into and out of operation by a manual switch 38.

The motor has an output member 40 which extends through a clearance bore 42 in the support 24 and reciprocates when the motor is operative. Rigid with the end of the output member 40 is a mounting plate 43 carrying an impact plate 44.

The facing surfaces of the impact plate 44 and the reaction plate 32 are slightly convex and advantageously have low-friction coatings.

In operation, the flange finisher 5 is placed on the flange 6 as shown in Figure 6 with its side walls 5A and 5B in the splayed-apart configuration, and the tool then placed over the flange as illustrated. The ball 28 rests on the outside of the inverted base of the flange finisher and the tool is positioned with the reaction plate 32 in contact with the side wall 5A. The position of the support 24 relative to the top member 22 is then adjusted to suit the size of the flange finisher, and then locked in position using the set screw 27. In Figure 6 and the succeeding Figures, the lips 16 of the flange finisher are shown partially diagrammatically.

The motor 34 is then set into operation by the fitter who holds the tool by means of the casing of the motor. The output member 40 of the motor rapidly reciprocates in the direction of the arrows B. This causes the impact plate to reciprocate rapidly into and out of contact with the side wall 5B of the flange finisher as the tool is moved along the length of the flange finisher, and the splayed-apart side walls 5A and 5B of the flange finisher are thus pressed into firm gripping contact with the sides of the flange, as shown in Figure 7 (corresponding, of course, to the configuration shown in Figure 1).

Although the tool is illustrated in Figures 6 and 7 for fitting a flange finisher onto a flange, it may equally well be used to fit a door seal in position, that is, for example, a door seal of the form shown in Figure 2 and the configuration shown in Figure 5. In this case, of course, the door seal, when initially mounted on the flange in its splayed-apart configuration, would be mounted either so that the tubular sealing section 18 would be in contact with the reaction plate 32 or so that the closing force applied by the impact plate 44 of the tool would be applied to the flange finisher through the sealing section 18.

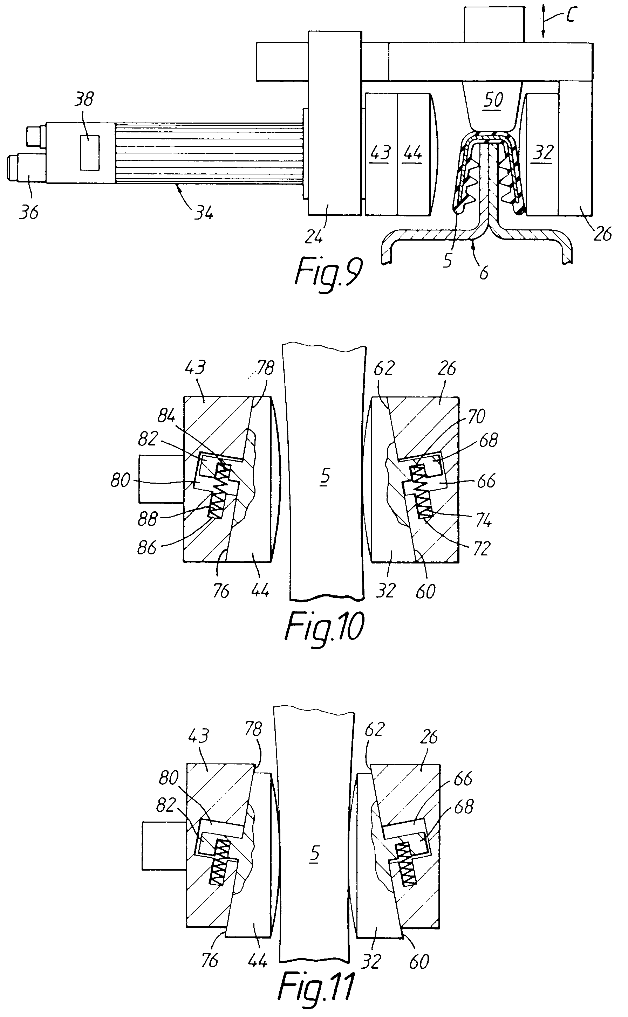

Figure 9 corresponds to Figure 6 but shows a modified form of the tool in which the ball 28 and the ball support 30 are replaced by a guide member 50 which provides a fixed surface in contact with the inverted base of the flange finisher 5. Preferably, this surface is provided with a low-friction coating.

The ball support 30 of the tool of Figures 6 to 8, and the guide 50 of the modified tool of Figure 9, may be adjustably mounted on the top plate 22 - so as to be adjustable in the direction of the arrows C (Figures 8 and 9). Both can be mounted with extensions extending through suitable apertures in the top plate 22 so that they can be moved into the required position and then locked, such as by means of a set screw.

In use, the tool is moved along the length of the flange finisher as it extends around the door opening so as to fit the flange finisher securely into gripping engagement with the flange throughout its length. This movement of the tool along the length of the flange finisher may be achieved manually by the fitter. The tool can be constructed to be relatively light in weight and so may be entirely supported by the fitter during this operation. Instead, however, it could be suspended by a flexible wire so that the fitter has to support only part of its weight.

Advantageously, the tool is constructed so that it is driven along the length of the flange finisher during its operation - that is, the fitter does not have to carry out this movement but simply has to support the tool (completely or partially) and guide it during this movement. For example, the rotatable ball 28 (Figures 6 to 8) or the guide 50 (Figure 9) can be replaced by a rotatably driven roller. This roller can be rotated by a separate drive motor (not shown) which comes into operation when the reciprocating motor 34 is energised, and thus drives the tool along the length of the flange by means of frictional contact with the flange finisher.

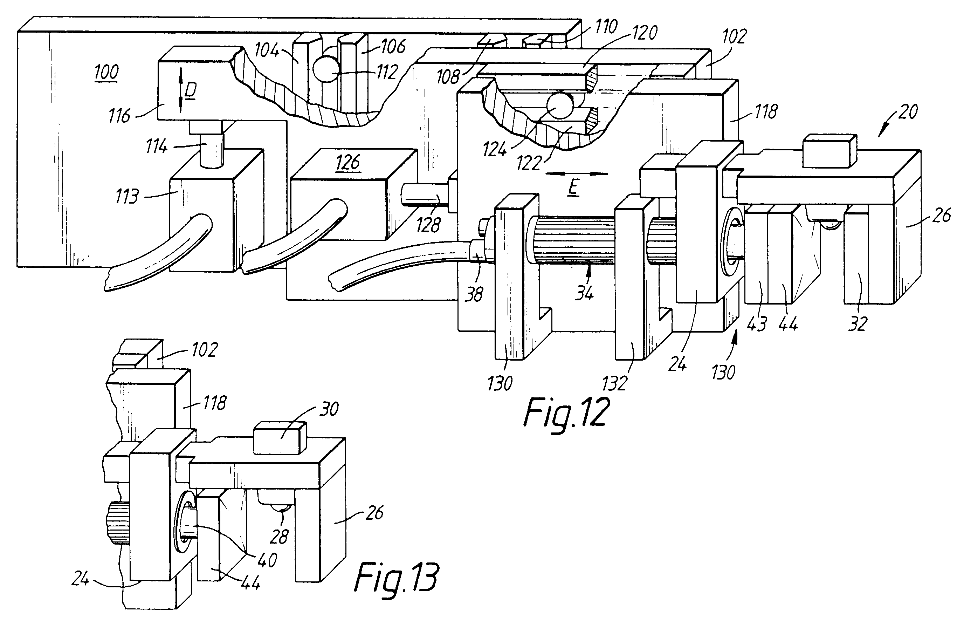

Advantageously, however, the tool is driven along the length of the flange by means of the reciprocating action of the motor 34 itself. Figures 10 and 11 show one way that this may be achieved. As illustrated, the reaction 32 is modified to have a face 60 which is inclined instead of perpendicular to the axis of the output member 40 of the motor and is in contact with a matchingly inclined surface 62 of the back plate 26. The surface 64 of the back plate 26 is interrupted by a recess 66 into which extends a finger 68 rigid with the reaction plate 32. This finger 68 is provided with a bore 70 facing a similar diameter bore 72 in the side wall of the recess 68. A compression spring 74 is positioned within these two bores.

Similarly, the impact plate 44 is provided with an inclined surface 76 which is in sliding contact with a matchingly inclined surface 78 of the mounting plate 43. The surface 78 is interrupted by a recess 80, corresponding to recess 66, and the impact plate 44 carries a finger 82 corresponding to finger 68. Bores 84 and 86 corresponding to bores 70 and 72 are provided together with a compression spring 88 corresponding to compression spring 74.

When the impact plate 44 is in its retracted position (Figure 10), that is, not in contact with the flange finisher, the compression springs 74 and 88 ensure that the reaction plate 32 and the impact plate 44 have the positions illustrated in that Figure relative to the back plate 26 and the mounting plate 43.

However, when the motor moves the impact plate 44 into contact with the flange finisher, the applied pressure causes the impact plate 44 and the reaction plate 32 to slide with respect to the back plate 26 and the mounting plate 43 - this movement being against the force exerted by the compression springs 74 and 88 and limited, of course, by the range of movement permitted within the recesses 66 and 80 for the fingers 68 and 82 respectively. The impact plate 44 therefore not only causes the splayed apart side walls of the flange finisher to be pressed towards each other into contact with the flange but also moves the impact plate 44 and the reaction plate 32 lengthwise along the flange finisher for a short distance. When the impact plate 44 is thereafter retracted by operation of the motor 34, the compression springs 74 and 88 cause the reaction plate 32 and the impact plate 34 to move back into the positions shown in Figure 10, ready for another operating stroke of the motor. In this way, the tool moves lengthwise along the flange at the same time as the reciprocating action of the impact plate moves the splayed-apart side walls 5A,5B of the flange finisher into contact with the flange.

In a modification, the mechanism described, for causing the tool to move along the flange finisher, can be provided on one side of the flange finisher only.

Figure 12 is a perspective view, partially broken away, showing how the tool may be mounted on the end of a robot arm.

The robot arm (not shown) carries a support plate 100 on which is mounted an intermediate plate 102. The support plate 100 has two pairs of longitudinal guides, 104,106 and 108, 110, in which are mounted rollers (only one, referenced 112, is visible in the Figure) which are carried by the intermediate plate 102. Plate 102 can thus move relative to plate 100 in the direction of arrows D, the rollers rotating within the guides. This movement is achieved by means of a control unit 113 which is mounted on the plate 100 and has an output member 114 connected to a shoulder 116 formed at one end of the plate 102. Energisation of the unit 113 causes the output member 114 to be adjusted in the directions of the arrows D so as to position the intermediate plate 102 with respect to the plate 100.

The intermediate plate 102 supports a tool carrying plate 118. The plate 102 carries two pairs of guides which are similar to the guides 104,106 and 108,110, except that they extend perpendicularly to the direction of the latter pairs. Plate 118 is partially broken away to show guides 120 and 122; the other pair of guides carried by plate 102 are not visible. Rotatable rollers (one shown at 124) are rotatably mounted on the plate 118 and extend between the guides 120 and 122 and between the other pair of guides (not shown). In this way, the tool support 118 can be moved in the direction of the arrows E relative to the intermediate plate 102. This movement is achieved by means of a control unit 126 which is mounted on the intermediate plate 102 and has an output member 128 which is movable in the direction of the arrows E to position the tool carrier 118 relative to the intermediate plate 102. The tool carrier plate 118 carries the tool itself which is shown at 130.

Items in Figure 12 corresponding to items in the other Figures are similarly referenced and the operation of the tool is the same as already described, except that it is carried and automatically positioned by the robot arm and the motors 112 and 126 instead of by the fitter.

As shown, the tool 130 is supported on the plate 118 by means of two arms 130 and 132 which are rigid with plate 118 and carry the motor 34.

The tool 130 in Figure 12 is illustrated as having the rotatable ball 28. Instead, however, the ball could be replaced by the guide 50 of Figure 9.

The impact plate 44 and the reaction plate 32 of the tool 130 in Figure 12 may be arranged to have the construction shown in Figures 10 and 11 so that, during reciprocation of the motor 34, the impact plate 44 and the reaction plate 32 slide with respect to the mounting plate 42 and the back plate 26 respectively and thus carry the tool, with the support plates 100,102 and 118, along the length of the flange finisher or door seal. In other words, this motion need not be controlled by the actual robot. However, it may be preferable to have this motion controlled by and carried out by the robot itself. In this case, the tool construction could be modified as shown in Figure 13. Here, the impact plate 44 is directly connected to the end of the output member 40 of the motor 34 instead of via the mounting plate 43, and there is no separate reaction plate 32. The latter's function is carried out by the back plate 26. The modified construction shown in Figure 13 could also be applied to the tools shown in Figures 6 to 9 - in which case, of course, they would have to be moved along the length of the flange by the fitter.

The tools illustrated have certain significant advantages over prior tools which have a pair of rollers mounted for rotation about parallel axes for closing the splayed-apart side walls of the flange finisher onto the flange. In such roller-type tools, the rollers respectively contact the outsides of the splayed-apart side walls of the flange finisher and rotate (in opposite directions) as the tool is moved along the length of the flange. The spacing between the rollers is selected to be such as to close the splayed-apart side walls onto the flange. Such roller-type tools which have a fixed spacing between the rollers can cause excessive pressure to be applied to the side walls of the flange finisher where the flange is of extra thickness. Conversely, insufficient pressure may be applied to the side walls if the flange is particularly thin. This disadvantage is avoided by the tools described and illustrated in this specification. Furthermore, a roller-type tool can become jammed; for example, the material of the flange finisher can be excessively compressed causing it to tend to expand lengthwise which may be resisted by its construction, thus resulting in a "bulking-up" of the material in front of the tool. This may particularly occur during start-up. This is avoided by the tools described and illustrated herein. With the tools described and illustrated herein, no damage occurs if for any reason the forward travel of the tool is temporarily prevented. However, with the roller-type tools, damage to the flange finisher can occur in the event of prevention of forward movement, particularly if the rollers are rotatably driven.

Roller-type tools cannot cope easily with sharp bends in the flange finisher, whereas this is not a problem with the tools described and illustrated herein.

With the tools described and illustrated herein, the surface of the impact plate 44 and/or the surface of the reaction plate 32 can be shaped to match any particular shape or configuration of the side wall or side walls of the flange finisher. For example, if one of the side walls is carrying a tubular sealing section 18 (Figure 2), the impact plate 44 or the reaction plate 32 could be formed with a matchingly-shaped groove. This ability to provide a shaped surface reduces the risk of damage to the flange finisher or door seal. Such matching surface shapes cannot so easily be achieved with the roller-type tools.

The tools described and illustrated herein can be used with special forms of flange finisher or door seal - for example, where only one side wall is splayed outwardly. It is much less easy to carry out this function with roller-type tools.

The casing of the motor 34 can itself be rotatably mounted on the support leg 24. This facilitates the fitting operation. The fitter can grip the tool by means of the casing of the motor 34 and guide it around the door opening, maintaining the motor casing in a substantially constant attitude and allowing the operating part of the tool to turn angularly with respect to the motor casing as the tool travels around the periphery of the door opening.

## Claims

1. A tool for fitting a channel-shaped strip (5) into embracing grip on a mount (6), comprising a support (20,24), reciprocatable means (44) reciprocatably mounted with respect to the support (20,24) and motor means (34) connected to the reciprocatable means (44) and mounted on the support (20,24) and energisable to reciprocate the reciprocatable means (44) with successive forward and retraction strokes whereby each forward stroke applies an impact force to the strip (5) to force it on to the mount as the tool is moved along the strip (5), characterised in that at least one of the side walls (5A,5B) of the strip (5) is initially splayed outwardly and in that the support includes mounting means (24) for mounting the reciprocatable means (44) adjacent the outside of a first one (e.g. 5B) of the side walls (5A,5B) of the strip (5) whereby each forward stroke of the reciprocatable means (44) applies the said impact force to the outside of the first side wall (5B) whereby to move the side walls (5A,5B) of the strip (5) relatively towards each other and into firm embracing contact with the mount (6).

2. A tool according to claim 1, characterised by reaction means (32) carried by the support (20) and adapted to be positioned adjacent the outside of the second one (5A) of the side walls of the strip (5) to apply a reaction force thereto in response to each impact force.

3. A tool according to claim 1 or 2, characterised by guiding means (28,50) carried by the support (20) for contacting the outside of the base of the strip (5).

4. A tool according to claim 3, characterised in that the guiding means comprises a rotatable member (28).

5. A tool according to any preceding claim, characterised in that the motor means comprises a reciprocating pneumatic motor (34).

6. A tool according to claim 1, characterised in that the support comprises a generally U-shaped frame (20,24,26) for embracing the strip (5) on the mount (6), the frame having a top plate (22) with two leg members (24,26) depending in spaced apart substantially parallel configuration, one leg member (24) mounting the reciprocatable means (44), the top plate (22) carrying guiding means (28,50) for contacting the outside of the base of the strip (5), and the other leg member (26) carrying reaction means (32) positioned to engage the outside of the second one (5A) of the side walls of the strip to apply a reaction force thereto in response to each impact force.

7. A tool according to claim 6, characterised in that the spacing between the two leg members (24,26) is adjustable.

8. A tool according to claim 6 or 7, characterised in that the leg member (24) mounting the reciprocatable means (44) carries the motor means (34).

9. A tool according to claim 8, characterised in that the casing of the motor means (34) constitutes a handle for the tool.

10. A tool according to any preceding claim, characterised by tool driving means (60,62,74,76,78,88) for driving the tool along the length of the strip (5).

11. A tool according to claim 10, characterised in that the tool driving means comprises means (60,62,74,76,78,88) operative in dependence on the reciprocation of the reciprocatable means (44).

12. A tool according to claim 11, characterised in that the reciprocatable means (44) is mounted so as to have limited movement for a predetermined distance which is perpendicular to the direction of reciprocation and which occurs in response to each forward stroke of reciprocation and is directed along the length of the strip (5) in use, whereby each forward stroke of the reciprocatable means (44) causes that means to move lengthwise along the length of the strip (5) for the predetermined distance relative to the remainder of the tool and each retraction stroke of the reciprocatable means (44) causes the remainder of the tool to move along the length of the strip for the same distance and relative to the reciprocatable means (44).

13. A tool according to claim 12, characterised in that the reciprocatable means (44) comprises a first member (44) having a first, impact, surface for contacting the first side wall (5B) of rhe strip (5) and a second surface (76) which is opposite to the first surface and is inclined thereto and is in sliding contact with a similarly inclined surface (78) of a second member (43) the inclined surfaces (76,78) being in contact with each other and being inclined towards the strip (5) in the direction in which the tool is driven therealong, the two members (43,44) being interconnected by control means (80,82) permitting the two inclined surfaces (76,78) and thus the first and second members (44,43) to slide relative to each other for the said predetermined distance against the action of resilient means (88).

14. A tool according to claim 13, characterised in that the reaction means comprises a third member (32) having a first surface for contacting the second side wall (5A) of the strip (5) and a second surface (60) which is opposite to the first surface and is inclined thereto and is in sliding contact with a similarly inclined surface (62) of a fourth member (26), the inclined surfaces (76,78) being in contact with each other and being inclined towards the strip (5) in the direction in which the tool is driven therealong, the two members (32,26) being interconnected by control means (66,68) permitting the two inclined surfaces (60,62) and thus the third and fourth members (32,26) to slide relative to each other for the said predetermined distance against the action of resilient means, whereby these members (32,26) slide relative to each other simultaneously with and in response to the sliding of the first and second members (44,43).

15. A tool according to any preceding claim, characterised in that it is carried by a robot arm (100.

16. A tool according to any preceding claim, characterised in that the impact force is applied to the first side wall (5B) of the strip (5) through a soft sealing profile attached thereto.

17. A tool according to any claim 2, characterised in that the reaction means (32) exerts the reaction force on the second side wall (5A) of the strip (5) through a soft sealing profile attached thereto.

18. A tool according to any preceding claim, characterised in that the surfaces thereof for contacting the strip (5) are covered, in low friction material.

19. A tool according to any preceding claim, characterised in that at least part of the surfaces thereof for contacting the strip are pre-formed to match the shape of the strip.
